Europäisches Patentamt

European Patent Office

Office européen des brevets

(11) Veröffentlichungsnummer: **0 059 831**
**B1**

(12) # EUROPÄISCHE PATENTSCHRIFT

(45) Veröffentlichungstag der Patentschrift:
24.07.85

(51) Int. Cl.⁴: **B 23 B 31/16**

(21) Anmeldenummer: 82100462.9

(22) Anmeldetag: 23.01.82

(54) **Kraftbetätigtes Spannfutter.**

(30) Priorität: 07.03.81 DE 3108745

(43) Veröffentlichungstag der Anmeldung:
15.09.82 Patentblatt 82/37

(45) Bekanntmachung des Hinweises auf die Patenterteilung:
24.07.85 Patentblatt 85/30

(84) Benannte Vertragsstaaten:
AT FR GB IT SE

(56) Entgegenhaltungen:
EP - A - 0 005 458
EP - A - 0 005 459
DE - A - 2 937 194
DE - B - 2 711 904

(73) Patentinhaber: **Paul Forkardt GmbH & Co. KG,
Rosenstrasse 44-46, D-4000 Düsseldorf 1 (DE)**

(72) Erfinder: **Steinberger, Josef, Sebastiansweg 30,
D-4000 Düsseldorf (DE)**
Erfinder: **Beckers, Heinrich, Zeppelinstrasse 60,
D-4060 Viersen 11 (DE)**

(74) Vertreter: **Patentanwälte Dipl.-Ing. Alex Stenger
Dipl.-Ing. Wolfram Watzke Dipl.-Ing. Heinz J. Ring,
Kaiser-Friedrich-Ring 70, D-4000 Düsseldorf 11 (DE)**

## Beschreibung

Die Erfindung betrifft ein kraftbetätigtes Spannfutter mit mehreren in einem Futterkörper radial geführten Spannbacken, die über geneigt zur Futterachse verlaufende Keilaufnahmen und in diese eingreifende Keilstücke an ein im Futterkörper axial verschiebbar geführtes Stellglied angeschlossen sind, dessen Arbeitshub durch Formschluss begrenzt und zum Entkuppeln der Spannbacken vom Stellglied durch Verdrehen eines im Futterkörper koaxial zur Futterachse gelagerten Ringes verlängerbar ist.

Kraftbetätigte Spannfutter der voranstehend beschriebenen Art sind aus DE-A-2 533 803 bekannt. Sie besitzen den Vorteil, dass die Spannbacken nach einer gezielten Verdrehung des Ringes von Hand, vorzugsweise durch einen von der Frontseite her in das Spannfutter einführbaren Schlüssel, durch einen Zusatzhub vom Stellglied entkuppelt und demzufolge radial aus dem Futterkörper herausgenommen werden können, um gegen andere, der neuen Bearbeitungsaufgabe angepasste Spannbacken ersetzt zu werden.

Um den beidseitig durch Anschläge, d.h. durch Formschluss begrenzten Arbeitshub des Spannfutters zum Entkuppeln der Spannbacken vom Stellglied in der nach hinten gerichteten Bewegungsrichtung verlängern zu können, besitzt bei der bekannten Ausführung des kraftbetätigten Spannfutters der voranstehend beschriebenen Art der im Futterkörper verdrehbar gelagerte Ring Aussparungen. In diese Aussparungen können in der einen, der Entriegelung der Spannbacken dienenden Endstellung des Ringes Keilstangen eintreten, die parallel zur Drehachse des Spannfutters im Futterkörper verschiebbar gelagert und jeweils zwischen einer Spannbacke und dem Stellglied als Übertragungselemente angeordnet sind. Diese Keilstangen schlagen in der anderen Endstellung des Ringes an dessen vorderer Stirnfläche an, so dass der Ring zugleich als Anschlag dient. Die Verwendung dieser bekannten Konstruktion ist deshalb auf Spannfutter beschränkt, die zwischen dem Stellglied und den Spannbacken axial im Futterkörper verschiebbar gelagerte Übertragungsglieder besitzen.

Der Erfindung liegt die Aufgabe zugrunde, ein kraftbetätigtes Spannfutter der eingangs beschriebenen Art zu schaffen, dessen vom Stellglied angetriebene Spannbacken durch einen Zusatzhub des Stellgliedes von diesem entkuppelt werden können, ohne dass es hierfür zusätzlicher Übertragungselemente bedarf, so dass sich neben einer Konstruktionsvereinfachung die Möglichkeit ergibt, die bekannte Konstruktion zum Entkuppeln der Spannbacken vom Stellglied bei Spannfuttern anzuwenden, bei denen die Keilstücke einstückig am Stellglied angeformt sind. Derartige Spannfutter sind beispielsweise aus DE-A-2 711 904 bekannt.

Die Lösung dieser Aufgabenstellung durch die Erfindung ist dadurch gekennzeichnet, dass der Ring zur gleichzeitigen Steuerung von mindestens zwei Anschlagbolzen ausgebildet ist, die im Futterkörper gelagert und als den Arbeitshub des einstückig mit den Keilstücken ausgebildeten Stellgliedes begrenzende Anschläge in den Bewegungsbereich des Stellgliedes verschiebbar sind.

Durch die erfindungsgemässe Ausbildung ergibt sich ein kraftbetätigtes Spannfutter, dessen Arbeitshub durch unmittelbar in den Bewegungsbereich des Stellgliedes eintretende Anschlagbolzen begrenzt ist, die gezielt zurückziehbar sind, um die Spannbacken vom Stellglied zu entkuppeln. Hierdurch ergibt sich eine von der Ausbildung des Übertragungsmechanismus zwischen Stellglied und Spannbacken unabhängige Konstruktion für die formschlüssige Begrenzung des Arbeitshubes, die neben einer hohen Funktionssicherheit einen geringen Konstruktionsaufwand besitzt und auch bei bekannten Futterkonstruktionen angewendet werden kann, da sowohl die Anschlagbolzen als auch der sie miteinander verbindende Ring nur einen geringen Raumbedarf haben und wegen ihrer funktionsmässigen Trennung vom Antrieb der Spannbacken in denjenigen Teilen des Futterkörpers untergebracht werden können, die nicht bereits für andere Bauteile des Futters bearbeitet werden müssen. Aus diesem Grunde ist es möglich, bereits vorhandene Spannfutter nachträglich gemäss der Erfindung auszurüsten, um diese den gestiegenen Sicherheitsanforderungen anzupassen.

Aus der DE-A-2 533 803 ist es zwar bekannt, Raststifte vorzusehen, die in den Bewegungsbereich der Spannbacken ragen und ein Herausfliegen der Spannbacken bei einem etwaigen Bruch der zugehörigen Keilstücke verhindern. Diese Raststifte werden auch durch Steuerflächen am verdrehbaren Sicherungsring gesteuert. Da diese Raststifte jedoch nur im Fall eines Bruchs des Keilgetriebes bezogen auf die jeweilige Spannbacke wirksam werden, sind sie nicht mit den erfindungsgemässen Anschlagbolzen zu vergleichen, die zur Begrenzung des Arbeitshubes des Stellgliedes eingesetzt werden und demzufolge eine vollständig andere Aufgabe und Wirkung haben als die bekannten Anschlagstifte.

Um unter Verzicht auf störanfällige Federn eine Zwangssteuerung der Anschlagbolzen durch den Ring zu erzielen, sind bei einer besonderen Ausführungsart die Anschlagbolzen mit dem Ring erfindungsgemäss durch formschlüssige Steuerkurven gekuppelt. Bei einer bevorzugten Ausführungsform sind die Steuerkurven innerhalb einer rückwärtigen Ausnehmung jedes Anschlagbolzens und an vorderseitigen Leisten des unmittelbar hinter den Ansghlagbolzen im Futterkörper gelagerten Ringes ausgebildet.

Die Anschlagbolzen werden gemäss einer besonderen Ausführungsart der Erfindung vorzugsweise radial verschiebbar im Futterkörper angeordnet. Ihre Zahl entspricht vorzugsweise der Anzahl der Spannbacken, da sie in dem zwischen den einzelnen Spannbacken vorhandenen Raum des Futterkörpers untergebracht werden.

Wenn gemäss einer weiteren Ausführungsart der Erfindung die Länge der Anschlagbolzen etwa der Länge der für sie im Futterkörper ausgebildeten Führung entsprechend ausgeführt wird, treten die radial aussen liegenden Enden der Anschlagbolzen optisch gut erkennbar aus der Umfangsfläche des Futterkörpers heraus, wenn das Stellglied zum Entkuppeln von den Spannbacken seinen Zusatzhub ausführen kann. Ausser einer optischen Erkennung dieses Entkupplungszustandes ist es selbstverständlich möglich, die aus dem Futter- körper herausragenden Anschlagbolzen auf elek- trische oder mechanische Weise abzutasten, um bei entkuppelten Spannbacken einen Drehantrieb des Spannfutters zwangsläufig zu verhindern.

Es wird schliesslich eine Ausführungsart vorgeschlagen, wonach der Ring zwischen seinen zwei Endstellungen in an sich bekannter Weise durch einen frontseitig in den Futterkörper einführbaren Handschlüssel verdrehbar ist, der ausschliesslich in derjenigen Stellung des Ringes abziehbar ist, in der die Anschlagbolzen in den Bewegungsbereich des Stellgliedes vorgeschoben sind. Ferner wird eine Ausführungsart vorgeschlagen, die gleichzeitig gewährleistet, dass in der ordnungsgemäss gekuppelten Stellung der Schlüssel ausgestossen wird – also nicht irrtümlich stecken bleibt. In entkuppelter Stellung kann der Schlüssel nicht abgezogen werden. Dies ergibt für die Bedienungsperson einen weiteren Hinweis, dass sich das Stellglied in der von den Spannbacken entkuppelnden Lage befindet, in der der Antrieb des Futters nicht eingeschaltet werden darf.

Auf der Zeichnung ist ein Ausführungsbeispiel des erfindungsgemässen Spannfutters dargestellt, und zwar zeigen:

Fig. 1 einen Längsschnitt durch das Spannfutter,
Fig. 2 eine Vorderansicht des Spannfutters mit einem Teilschnitt gemäss der Schnittlinie II–II in Fig. 1,
Fig. 3 einen weiteren Teilschnitt gemäss der Schnittlinie III–III in Fig. 2 und
Fig. 4 einen Schnitt gemäss der Schnittlinie IV–IV in Fig. 3.

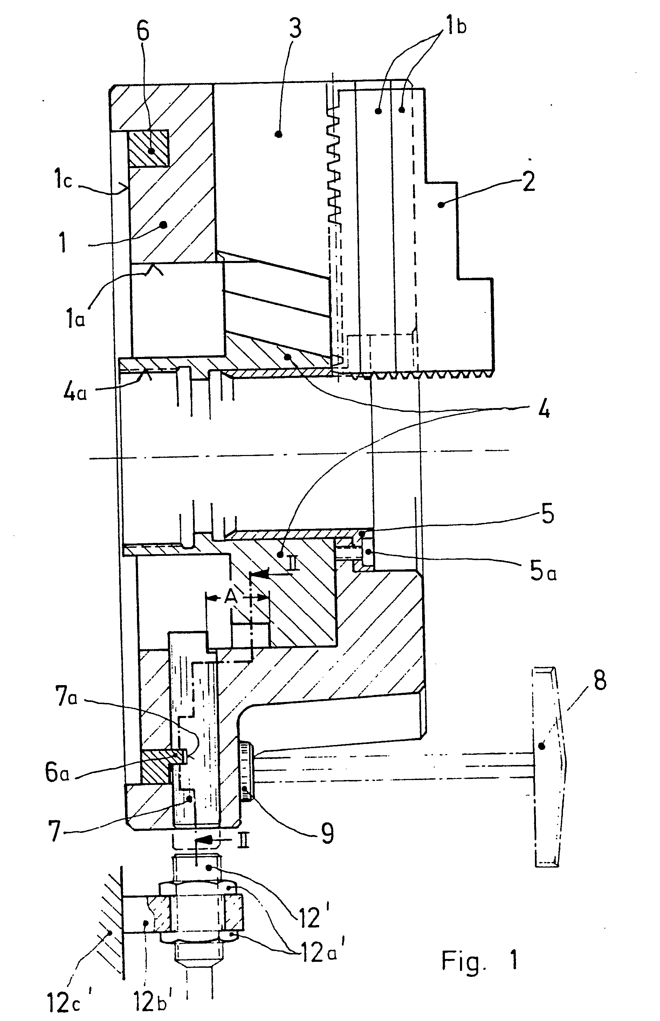

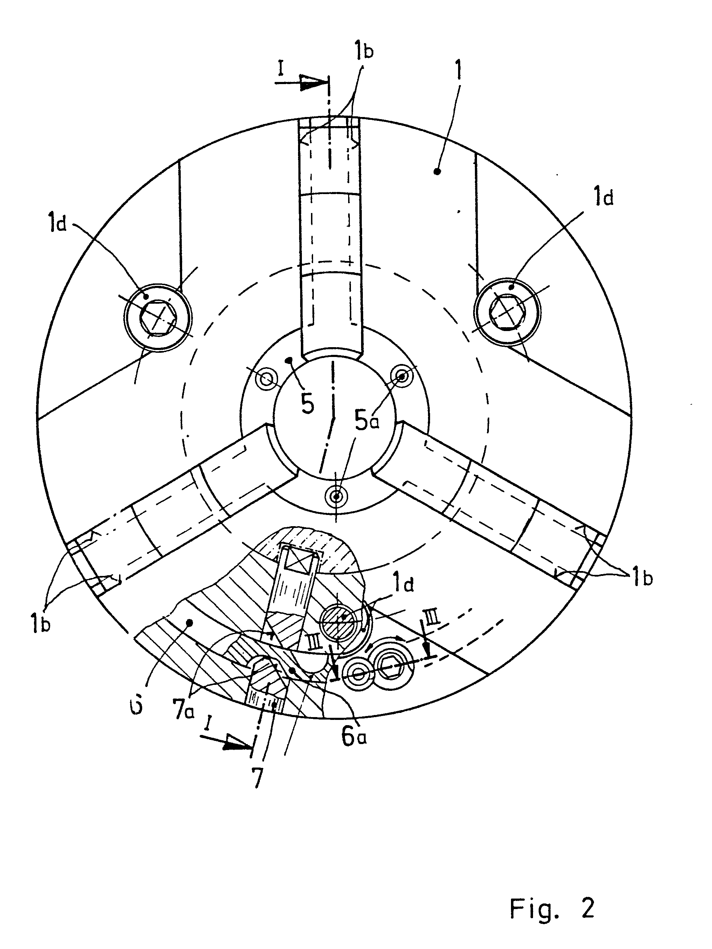

Das kraftbetätigte Spannfutter, dessen Längsschnitt in Fig. 1 sich aus dem Schnittverlauf gemäss der Schnittlinie I–I in Fig. 2 ergibt, besitzt einen Futterkörper 1, welcher drei Axialbohrungen 1a für Futterbefestigungsschrauben 1d besitzt, mit denen das Spannfutter an einer Spindel einer Werkzeugmaschine befestigt wird. Bei dem als Ausführungsbeispiel dargestellten Spannfutter handelt es sich um ein Backenfutter mit drei Spannbacken 2, so dass der Futterkörper 1 drei Radialführungen 1b aufweist. Die Spannbacken 2 werden jeweils durch eine Treibbacke 3 angetrieben, die über geneigt zur Futterachse verlaufende Keilstücke in ebenfalls geneigt zur Futterachse verlaufende Keilaufnahmen eines Stellgliedes 4 eingreift. Dieses Stellglied 4 ist axial verschiebbar im Futterkörper 1 gelagert und bewirkt bei einer Axialverschiebung eine radiale Bewegung der Treibbacken 3 und damit der mit diesen Treibbakken 3 verbundenen Spannbacken 2 in den Radialführungen 1b des Futterkörpers 1. Um das Stellglied 4 an einer auf der Zeichnung nicht dargestellten Zugstange befestigen zu können, ist es mit einem Gewinde 4a versehen.

Das als Ausführungsbeispiel dargestellte Spannfutter ist als Hohlfutter ausgeführt, so dass die einzuspannenden Werkstücke den Spannbakken 2 durch die hohl ausgeführte Spindel von der Rückseite der Werkzeugmaschine her zugeführt werden können. Um diese Werkstücke zu führen und Beschädigungen des Stellgliedes 4 zu vermeiden, ist dessen zentrale Bohrung durch eine Führungshülse 5 abgedeckt, die mittels Schrauben 5a am Futterkörper 1 befestigt ist.

Im hinteren Teil des Futterkörpers 1 ist ein Ring 6 drehbar gelagert, dessen axiale Lagefixierung vervollständigt wird, wenn der Futterkörper 1 des Spannfutters am Flansch einer nicht dargestellten Spindel befestigt worden ist. Die für die Anlage des Futterkörpers 1 an der Spindel vorgesehene Anschlagfläche 1c ist in Fig. 1 zu erkennen.

Der Ring 6 dient zur gleichzeitigen Steuerung dreier Anschlagbolzen 7, die beim Ausführungsbeispiel in radialer Richtung verschiebbar im Futterkörper 1 angeordnet sind. Jeder Anschlagbolzen 7 ist mit einer rückwärtigen Ausnehmung 7a versehen, deren Ausbildung am besten in Fig. 2 zu erkennen ist. In diese Ausnehmung 7a ragt jeweils eine an der Vorderseite des Ringes 6 ausgebildete Leiste 6a hinein, die in der Vorderansicht ebenfalls in Fig. 2 gezeichnet ist. Die Leisten 6a und Ausnehmungen 7a bilden zusammen Steuerkurven, welche eine formschlüssige Kupplung der Anschlagbolzen 7 mit dem Ring 6 bewirken, so dass die radiale Bewegung der Anschlagbolzen 7 bei einer Verdrehung des Ringes 6 zwangsläufig erfolgt.

In Fig. 1 ist der Arbeitshub A des Stellgliedes 4 eingezeichnet, der in Richtung auf die Vorderseite des Spannfutters durch Anlage des Stellgliedes 4 am Futterkörper 1 und in entgegengesetzter Richtung durch Anlage des Stellgliedes 4 an den in seinen Bewegungsbereich hinein verschobenen Anschlagbolzen 7 begrenzt ist. Bei der in den Fig. 1 und 2 dargestellten Stellung des Ringes 6 kann das Stellglied 4 deshalb lediglich innerhalb seines Arbeitshubes A verschoben werden; innerhalb dieses Arbeitshubes A ist ein zuverlässiger Eingriff der Treibbacken 3 in das Stellglied 4 sichergestellt.

Wenn der Ring 6 dagegen aus der in den Fig. 1 und 2 gezeichneten Stellung im Uhrzeigersinn verdreht wird, werden die Anschlagbolzen 7 radial nach aussen in die mit strichpunktierten Linien dargestellte Lage gezogen. In dieser Lage befinden sich die inneren Enden der Anschlagbolzen 7 ausserhalb des Bewegungsbereiches des Stellgliedes 4, so dass dieses durch seine Kraftbetätigung derart weit zurückgezogen werden kann, dass die Keilstücke der Treibbacken 3 aus den Keilaufnahmen des Stellgliedes 4 heraustreten. Auf diese Weise ist es möglich, die Treibbacken 3 zusammen mit den Spannbacken 2 aus den Radialführungen 1b des Futterkörpers 1 herauszunehmen, um entweder die Spannbacken 2 relativ zu den drei Backen 3 zu versetzen oder durch andere Spannbacken 2 zu ersetzen, bevor die Treibbacken 3 mit den Spannbacken 2 erneut in den Futterkörper 1 eingeführt werden. Bei einer anschliessenden Axialbewegung des Stellgliedes 4 in Richtung auf die Frontseite des Futterkörpers 1 erfolgt ein Wiedereintritt der Keilstücke der Treibbacken 3 in die Keilaufnahmen des Stellgliedes 4, so dass die Spannbacken 2 wiederum in radialer Richtung bewegt werden, wenn das Stellglied 4 innerhalb seines Arbeitshubes A in axialer Richtung verschoben wird. Damit keine unbeabsichtigte Entkupplung der Treibbacken 3 vom Stellglied 4 auftreten kann, wird der Ring 6 nach Einsetzen der Treibbacken 3 und Spannbacken 2 und nach einer Überführung des Stellgliedes 4 in den Arbeitshub A wieder in die in den Fig. 1 und 2 dargestellte Lage verdreht. In dieser Stellung verhindern die in den Bewegungsbereich des Stellgliedes 4 hineinragenden Anschlagbolzen 7 ein unbeabsichtigtes Entkuppeln zwischen Treibbacken 3 und Stellglied 4.

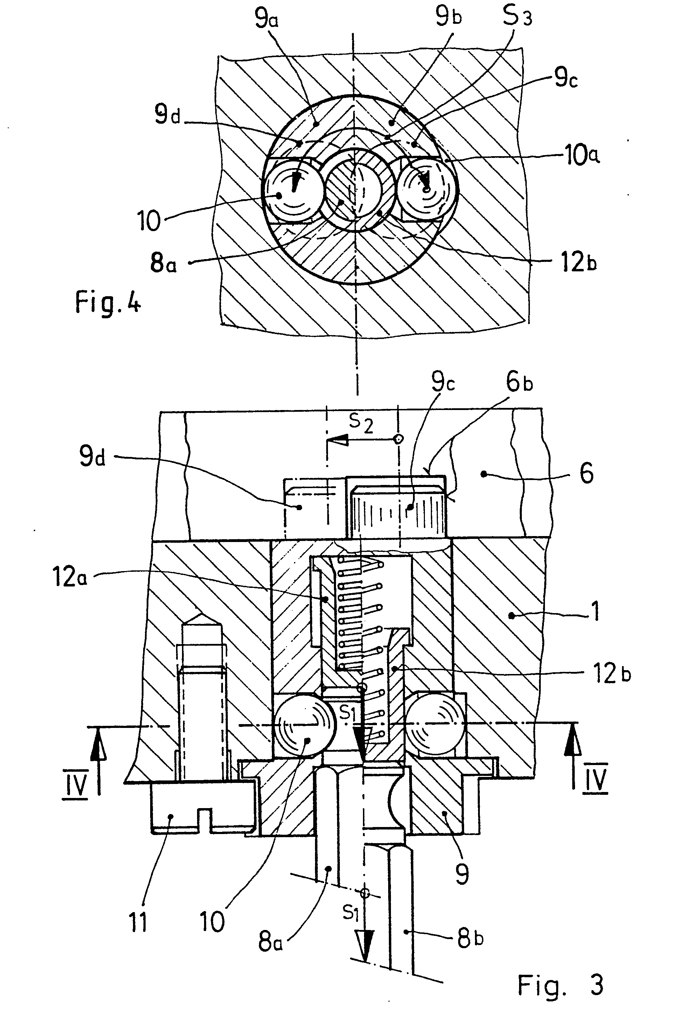

Die Verdrehung des Ringes 6 zwischen den beiden möglichen Endstellungen erfolgt beim dargestellten Ausführungsbeispiel durch einen in Fig. 1 strichpunktiert angedeuteten Handschlüssel 8, der frontseitig in eine Schlüsselaufnahme 9 eingesetzt werden kann. Diese in den Fig. 3 und 4 in ihren Einzelheiten dargestellte Schlüsselaufnahme 9 greift mit einem exzentrischen Ansatz 9c in eine entsprechende Nut 6b des Ringes 6 ein. Durch eine die Schlüsselaufnahme 9 teilweise überdeckende Schraube 11 wird der Schwenkweg begrenzt und die Schlüsselaufnahme 9 im Futterkörper 1 gehalten. Ein Rastelement 10, beispielsweise eine Kugel, stellt sicher, dass der Handschlüssel 8 nur dann in die Schlüsselaufnahme 9 gesteckt oder herausgezogen werden kann, wenn sich der Ring 6 und damit die Anschlagbolzen 7 in der Verriegelungsstellung befinden. Nach dem Verriegeln durch Schwenken des Schlüsselgehäuses 9 von der Stellung 9a in die Stellung 9b um den Winkel $S_3$ kann die Kugel 10 in einen Freiraum 10a eintauchen und gibt den Schlüssel 8 frei, der dann durch eine Federbüchse 12 um den Weg $S_1$ bei noch stillstehender Maschine ausgestossen wird.

In den Fig. 3 und 4 ist die verriegelte Stellung des Handschlüssels 8 mit der Bezugsziffer 8a und die ausgestossene Stellung des Handschlüssels 8 mit der Bezugsziffer 8b gekennzeichnet. Desgleichen erhielt die Federbüchse 12 die Bezugsziffer 12a bei verriegeltem Schlüssel und die Bezugsziffer 12b bei freigegebenem Schlüssel. Auch die Schlüsselaufnahme 9 trägt bei verriegeltem Schlüssel 8 die Bezugsziffer 9a und bei freigegebenem Schlüssel die Bezugsziffer 9b. Mit der Ziffer 9c ist ein Ansatz beziffert, dessen geschwenkte Stellung die Bezugsziffer 9d trägt. Schliesslich ist mit $S_1$ der Axialweg des Handschlüssels 8 bzw. der Federbüchse 12, mit $S_2$ der Schwenkweg des Ansatzes 9c und mit $S_3$ der Schwenkwinkel der Schlüsselaufnahme 9 gekennzeichnet. Die Fig. 3 und 4 zeigen den Handschlüssel 8 bzw. die Schlüsselaufnahme 9 in der linken Hälfte in der verriegelten und in der rechten Hälfte in der entriegelten Stellung.

Wie die strichpunktierte Lage der Anschlagbolzen 7 in den Fig. 1 und 2 erkennen lässt, ragen sie sichtbar aus der Umfangsfläche des Futterkörpers 1 heraus, wenn die vorderen Enden der Anschlagbolzen 7 aus dem Bewegungsbereich des Stellgliedes 4 herausbewegt worden sind. Die Anschlagbolzen 7, deren Länge etwa der Länge der für sie im Futterkörper 1 ausgebildeten Führung entspricht, zeigen somit optisch eindeutig an, dass der Arbeitshub A des Stellgliedes 4 zum Entkuppeln der Treibbacken 3 vom Stellglied 4 vergrössert werden kann. Die aus dem Futterkörper 1 herausragenden Anschlagbolzen 7 können bei Bedarf elektrisch oder mechanisch abgetastet werden, um in der mit strichpunktierten Linien dargestellten Stellung einen Drehantrieb des Spannfutters zu verhindern. In Fig. 1 ist ein Wegtaster 12' eingezeichnet, der mittels zweier Muttern 12a' an einem Lagerteil 12b' befestigt ist, welches ortsfest an einem Teil 12c' der Werkzeugmaschine angeordnet ist. Mit Hilfe dieses Wegtasters 12' kann überwacht werden, ob sich die Anschlagbolzen 7 in ihrer Wirkstellung innerhalb des Futterkörpers 1 oder in ihrer entriegelten Stellung befinden, in denen eine Rotation des Futters verhindert werden muss.

Bezugsziffernliste:

| | |
|---|---|
| 1 | Futterkörper |
| 1a | Axialbohrung |
| 1b | Radialführung |
| 1c | Anschlagfläche |
| 1d | Futterbefestigungsschraube · |
| 2 | Spannbacke |
| 3 | Treibbacke |
| 4 | Stellglied |
| 4a | Gewinde |
| 5 | Führungshülse |
| 5a | Schraube |
| 6 | Ring |
| 6a | Leiste |
| 6b | Nut |
| 7 | Anschlagbolzen |
| 7a | Ausnehmung |
| 8 | Handschlüssel |
| 9 | Schlüsselaufnahme |
| 9a | Schlüsselaufnahme |
| 9b | Schlüsselaufnahme |
| 9c | Ansatz |
| 9d | Ansatz |
| 10 | Rastelement (Kugel) |
| 10a | Freiraum |
| 11 | Schraube |
| 12 | Federbüchse |
| 12' | Wegtaster |
| 12a' | Mutter |
| 12b' | Lagerteil |
| 12c' | Teil |
| A | Arbeitshub |
| $S_1$ | Axialweg |
| $S_2$ | Schwenkweg |
| $S_3$ | Schwenkwinkel |

## Patentansprüche

1. Kraftbetätigtes Spannfutter mit mehreren in einem Futterkörper (1) radial geführten Spannbacken (2), die über geneigt zur Futterachse verlaufende Keilaufnahmen und in diese eingreifende Keilstücke an ein im Futterkörper (1) axial verschiebbar geführtes Stellglied (4) angeschlossen sind, dessen Arbeitshub (A) durch Formschluss begrenzt und zum Entkuppeln der Spannbacken (2) vom Stellglied (4) durch Verdrehen eines im Futterkörper (1) koaxial zur Futterachse gelagerten Ringes (6) verlängerbar ist, dadurch gekennzeichnet, dass der Ring (6) zur gleichzeitigen Steuerung von mindestens zwei Anschlagbolzen (7) ausgebildet ist, die im Futterkörper (1) gelagert und als den Arbeitshub (A) des einstückig mit den Keilstücken ausgebildeten Stellgliedes (4) begrenzende Anschläge in den Bewegungsbereich des Stellgliedes (4) verschiebbar sind.

2. Spannfutter nach Anspruch 1, dadurch gekennzeichnet, dass die Anschlagbolzen (7) mit dem Ring (6) durch formschlüssige Steuerkurven (6a, 7a) gekuppelt sind.

3. Spannfutter nach Anspruch 2, dadurch gekennzeichnet, dass die Steuerkurven innerhalb einer rückwärtigen Ausnehmung (7a) jedes Anschlagbolzens (7) und an vorderseitigen Leisten (6a) des unmittelbar hinter den Anschlagbolzen (7) im Futterkörper (1) gelagerten Ringes (6) ausgebildet sind.

4. Spannfutter nach Anspruch 1 bis 3, dadurch gekennzeichnet, dass die Anschlagbolzen (7) radial verschiebbar im Futterkörper (1) angeordnet sind.

5. Spannfutter nach mindestens einem der Ansprüche 1 bis 4, dadurch gekennzeichnet, dass die Länge der Anschlagbolzen (7) etwa der Länge der für sie im Futterkörper (1) ausgebildeten Führung entspricht.

6. Spannfutter nach mindestens einem der Ansprüche 1 bis 5, dadurch gekennzeichnet, dass der Ring (6) zwischen seinen zwei Endstellungen in an sich bekannter Weise durch einen frontseitig in den Futterkörper (1) einführbaren Handschlüssel (8) verdrehbar ist, der ausschliesslich in derjenigen Stellung des Ringes (6) abziehbar ist, in der die Anschlagbolzen (7) in den Bewegungsbereich des Stellgliedes (4) vorgeschoben sind.

7. Spannfutter nach mindestens einem der Ansprüche 1 bis 6, dadurch gekennzeichnet, dass der Handschlüssel (8) in der Kupplungsstellung der Anschlagbolzen (7) selbsttätig aus der Schlüsselaufnahme (9) ausgestossen wird, vorzugsweise durch eine Federbüchse (12).

## Claims

1. Power operated chuck with a plurality of radially guided jaws (2) in a chuck body (1) which are connected by means of tapered wedge-receivers inclined to the chuck axis in which wedges engage to an axially slidably guided positioning member (4) in the chuck body (1), the working stroke of which is limited by engagement, and which is extendable to couple the jaws (2) to the positioning member (4) by twisting a ring (6) disposed in the chuck body (1) coaxial with the chuck axis, characterised in that, the ring (6) is constructed for simultaneous control of at least two stroke bolts (7), which are disposed in the chuck body (1) and which are slidable in a limited stroke in the range of movement of the positioning member (4) with the working stroke (A) of the positioning member (4) constructed in one piece with the wedges.

2. Chuck according to claim 1, characterised in that the stroke bolts (7) are coupled with the ring (6) by keyed control curves (6a, 7a).

3. Chuck according to claim 2, characterised in that the control curves are constructed within a rearward extension (7a) of each stroke bolt (7) and on the forwardly facing projection (6a) of the ring (6) disposed immediately behind each stroke bolt (7) in the chuck body (1).

4. Chuck according to claim 1 to 3, characterised in that the stroke bolts (7) are disposed radially slidable in the chuck body (1).

5. Chuck body according to at least one of claims 1 to 4, characterised in that the length of the stroke bolts (7) corresponds at least to the length of the guide constructed for it in the chuck body (1).

6. Chuck body according to at least one of claims 1 to 5, characterised in that the ring (6) is turnable between its two end positions in a known manner by means of a hand key (8) adapted to be introduced into the front face of the chuck body (1), which is adapted to be drawn out only in a particular position of the ring (6), in which the stroke bolts (7) are advanced in the range of movement of the positioning member (4).

7. Chuck according to at least one of claims 1 to 6, characterised in that the hand key (8) is independently ejected from the key receiver (9) in the coupling position of the stroke bolts (7), preferably by means of a spring box (12).

## Revendications

1. Mandrin de serrage actionné par une source d'énergie extérieure, avec plusieurs mors (2) guidés radialement dans un corps de mandrin (1), lesquels sont raccordés, par l'intermédiaire de logements de clavette inclinés par rapport à l'axe du mandrin, et de clavettes placées dans ces logements, à un vérin (4) guidé et déplaçable axialement dans le corps de mandrin (1), la course de travail (A) dudit mandrin étant limitée par fermeture géométrique, et prolongeable, pour le débrayage des mors (2) du vérin (4) par la rotation d'un anneau (6) logé dans le corps de mandrin (1) et coaxial avec l'axe de mandrin, caractérisé en ce que l'anneau est conformé pour assurer le guidage simultané d'au moins deux butées d'arrêt (7) montées dans le corps de mandrin (1), et utilisées comme butoirs limitant la course de travail (A) du vérin (4) formant partie intégrante avec les clavettes, lesdites butées étant réglables dans la zone de mouvement du vérin (4).

2. Mandrin de serrage selon la revendication 1, caractérisé en ce que les butées d'arrêt (7) sont

**0 059 831**

couplées avec l'anneau (6) au moyen de cames (6a, 7a) de guidage par clabotage.

3. Mandrin de serrage selon la revendication 2, caractérisé en ce que les cames de guidage sont réalisées entre un évidement arrière (7a) de chaque butée d'arrêt (7), et une bordure avant (6a) de l'anneau (6) situé immédiatement derrière les butées d'arrêt (7) dans le corps de mandrin (1).

4. Mandrin de serrage selon les revendications 1 à 3, caractérisé en ce que les butées d'arrêt (7) sont montées libres en déplacement radial dans le corps de mandrin (1).

5. Mandrin de serrage selon au moins une des revendications 1 à 4, caractérisé en ce que la longueur des butées d'arrêt (7) correspond sensiblement à la longueur du guidage réalisé pour elles dans le corps de mandrin (1).

6. Mandrin de serrage selon au moins l'une des revendications 1 à 5, caractérisé en ce que l'anneau (6) peut être entraîné en rotation entre ses deux extrémités de manière connue, au moyen d'un levier de manœuvre (8) introductible par l'avant dans le corps de mandrin (1), ledit levier de manœuvre étant extractible exclusivement dans la position de l'anneau dans laquelle les butées d'arrêt (7) sont repoussées dans la zone de mouvement du vérin (4).

7. Mandrin de serrage selon au moins l'une des revendications 1 à 6, caractérisé en ce que le levier de manœuvre (8) est expulsé automatiquement de son logement d'engrènement (9), dans la position d'accouplement des butées de serrage (7), de préférence au moyen d'un boîtier à ressort (12).

Fig. 1

0 059 831

Fig. 2

Fig.4

Fig. 3